Europäisches Patentamt

European Patent Office

Office européen des brevets

(11) Veröffentlichungsnummer: **0 006 236**
**A1**

(12) **EUROPÄISCHE PATENTANMELDUNG**

(21) Anmeldenummer: 79101974.8

(22) Anmeldetag: 15.06.79

(51) Int. Cl.³: **B 60 D 1/16**

(30) Priorität: 16.06.78 IT 8493478
24.06.78 IT 8493978

(43) Veröffentlichungstag der Anmeldung: 09.01.80
Patentblatt 80/1

(84) Benannte Vertragsstaaten: BE DE FR

(71) Anmelder: Tedeschi, Enzo, Via XXIV Giugno 21,
I-37139 San Massimo, Verona (IT)

(72) Erfinder: Tedeschi, Enzo, Via XXIV Giugno 21, I-37139
San Massimo, Verona (IT)

(74) Vertreter: Buchner, Otto, Dr. et al, Patentanwälte Dipl.-
Ing. Klaus Westphal Dr. rer. nat. Bernd Mussgnug Dr.
rer. nat. Otto Buchner Flossmannstrasse 30a, D-8000
München 60 (DE)

(54) Vorrichtung zum Abschleppen eines Fahrzeugs.

㉗ Abschleppvorrichtung mit einer Stange (10), deren vorderes Ende (12) an einem abschleppenden Fahrzeug (28) und deren rückwärtiges Ende (16) an einem lenkbaren Vorderrad (58) eines abzuschleppenden Fahrzeugs (30) befestigt werden kann. Die am rückwärtigen Ende (16) der Stange (10) befindliche und am lenkbaren Vorderrad (58) des abzuschleppenden Fahrzeugs anzubringende Befestigungseinrichtung ist um eine bezüglich der Stange (10) feste Drehachse drehbar mit der Stange (10) verbunden. Dadurch folgt das abzuschleppende Fahrzeug (30) bei zwangsweiser Lenkung in gleichbleibendem Abstand dem abschleppenden Fahrzeug (28), ohne dass im abzuschleppenden Fahrzeug ein Lenkung und Bremse betätigender Fahrer erforderlich ist.

ACTORUM AG

Dipl. Ing. Klaus Westphal

Dr. rer. nat. Bernd Mussgnug

Dr. rer. nat. Otto Buchner

PATENTANWÄLTE

Seb.-Kneipp-Strasse 14

D-7730 VS-VILLINGEN

Flossmannstrasse 30 a

D-8000 MÜNCHEN 60

Telefon 07721 - 55343
Telegr. Westbuch Villingen
Telex    5213177 webu d

Telefon 089 - 832446
Telegr. Westbuch München
Telex    5213177 webu d

U.Z: 822.11

Enzo TEDESCHI

Via XXIV Giugno 21,

San Massimo, Verona/Italien

Vorrichtung zum Abschleppen eines Fahrzeugs

Die Erfindung betrifft eine Vorrichtung zum Abschleppen eines Fahrzeugs, das mindestens ein lenkbares Vorderrad aufweist, mit einer starren Stange, deren vorderes Ende mittels einer lösbaren Gelenkverbindung an dem abschleppenden Fahrzeug und deren rückwärtiges Ende an dem abzuschleppenden Fahrzeug festlegbar ist.

Um ein Fahrzeug, insbesondere Kraftfahrzeug, z.B. mittels eines Abschleppseils abzuschleppen, muss stets in dem abzuschleppenden Fahrzeug ein Fahrer zum Lenken der Räder

- 2 -

und ggfs. zum Bremsen sitzen. Ohne Fahrer im abzuschleppenden
Fahrzeug kann das Abschleppen nur mittels eines speziell dafür mit einem Kran ausgerüsteten Abschleppfahrzeugs durchgeführt werden, wobei der die lenkbaren Räder enthaltende Vorderteil des Fahrzeugs an dem Kran aufgehängt wird. Wenn ein
solches relativ kostspieliges Abschleppfahrzeug mit Kran nicht
zur Verfügung steht, sind für das Abschleppen stets zwei Personen erforderlich, nämlich der Fahrer des abschleppenden und
der Fahrer des abzuschleppenden Fahrzeugs. Daher ist für das
Abschleppen eines Fahrzeugs ein erheblicher Aufwand an Arbeitskraft notwendig.

Durch die Erfindung soll eine Vorrichtung zum Abschleppen
eines Fahrzeugs mittels eines normalen Kraftfahrzeugs, beispielsweise eines Personenkraftwagens oder eines Traktors,
ohne spezielle Hilfseinrichtungen geschaffen werden, die
das Abschleppen mit Hilfe eines einzigen Fahrers im abschleppenden Fahrzeug ermöglicht.

Diese Aufgabe wird bei einer Vorrichtung der eingangs genannten Art erfindungsgemäß dadurch gelöst, daß am rückwärtigen Ende der Stange eine an einem lenkbaren Vorderrad
des abzuschleppenden Fahrzeugs lösbar festlegbare Befestigungseinrichtung um eine wenigstens bezüglich des rückwärtigen Endes
der Stange feste Drehachse drehbar gelagert ist.

Wenn ein Fahrzeug mit Hilfe dieser erfindungsgemäßen Vorrichtung abgeschleppt werden soll, muss lediglich die Drehachse koaxial zur Drehachse eines lenkbaren Vorderrades des
abzuschleppenden Fahrzeugs angeordnet und die um diese Achse
drehbare Befestigungseinrichtung, vorzugsweise eine Scheibe
o.dgl., muss in dieser Lage an dem Vorderrad befestigt werden. Das vordere Ende der Stange wird in einer bei Anhängern,

Wohnwagen od.dgl. üblichen Weise mittels einer lösbaren, vorzugsweise
kardanischen Gelenkverbindung, beispielsweise eines Kugelgelenks, mit dem Rahmen des abschleppenden Fahrzeugs verbunden. Da die Drehachse der mit dem lenkbaren Vorderrad
fest verbundenen Befestigungseinrichtung bezüglich der
Stange im wesentlichen fest bleibt, muss das abzuschleppende Fahrzeug nunmehr jeder Richtungsänderung des abschleppenden Fahrzeugs
zwangsweise folgen. Gleichzeitig überträgt die         Stange
jede Beschleunigungs- oder Verzögerungsbewegung des abschleppenden Fahrzeugs unmittelbar auf das abzuschleppende
Fahrzeug, so daß weder zum Lenken noch zum Abbremsen des
abzuschleppenden Fahrzeugs ein Fahrer erforderlich ist.
Das abgeschleppte Fahrzeug folgt im wesentlichen spurgenau
und mit gleichbleibendem Abstand dem abschleppenden Fahrzeug.
Auch eine Überbelastung oder ein Durchscheuern der Abschleppvorrichtung, wie es bei Abschleppseilen häufig eintritt,
ist infolge der Verwendung einer starren Stange für die
Kraftübertragung nicht mehr möglich. Schließlich ist die
erfindungsgemäße Vorrichtung selbst bei scharfen Richtungsänderungen des abschleppenden Fahrzeugs voll funktionsfähig.
Bei Verwendung eines Abschleppseiles dagegen dürfen nicht
zu enge Kurven gefahren werden, da sonst die Kraftkomponente
in Richtung der Vorderräder des abzuschleppenden Fahrzeugs
zu klein werden kann und eine Überbelastung des Abschleppseils eintritt.

Das vordere Ende der Stange kann bei einer zweckmäßigen
Ausführungsform an einer ohnehin hinten in der Mitte des
abschleppenden Fahrzeugs vorhandenen Kupplungseinrichtung meist
kardanisch angekuppelt werden. Eine andere, von einer solchen Kupplungseinrichtung unabhängige Ausführungsform der Erfindung weist auch am vorderen Ende der Stange eine am Hinterrad des abschleppenden Fahrzeugs lösbar festlegbare Befestigungseinrichtung auf, die um eine Achse schwenkbar und um eine dazu senkrechte Achse drehbar gelagert ist. In diesem Fall wird das vordere Ende der Stange in gleicher Weise an einem Hinterrad des abschleppenden Fahrzeugs befestigt, wie das rückwärtige Ende am entsprechenden Vorderrad des abzuschleppenden Fahrzeugs. Die Stange verläuft dann im wesentlichen parallel zu einer Außenseite der beiden Fahrzeuge. Bei dieser Ausführungsform wird die kardanische Gelenkverbindung zwischen Stange und abschleppendem Fahrzeug dadurch verwirklicht, daß einerseits die am Hinterrad des abschleppenden Fahrzeugs festgelegte Befestigungseinrichtung bezüglich der Stange, beispielsweise mittels einer Steckbolzenverbindung, um eine Achse schwenkbar und um eine dazu senkrechte Achse drehbar gelagert ist. Die zur Radachse koaxiale Achse, um die sich die am Rad festgelegte Befestigungseinrichtung bezüglich der Stange dreht, ist also bei dieser Ausführungsform am vorderen Ende der Stange bezüglich der Stange nicht fest, wie am rückwärtigen Ende, sondern um eine dazu senkrechte Achse schwenkbar gegenüber der Stange.

Zweckmäßigerweise sind die Befestigungseinrichtung bzw., bei der zweiten Ausführungsform, die Befestigungseinrichtungen über ein Kugellager drehbar mit dem jeweiligen Ende der Stange verbunden.

Bei einer bevorzugten Ausführungsform weisen die Befestigungseinrichtung bzw. Befestigungseinrichtungen je eine ebene Scheibe mit Bohrungen auf, die mittels durch die Bohrungen
geführter Schraubbolzen und ggfs. auf diese aufgeschraubter
Muttern an dem lenkbaren Vorderrad und ggfs. an dem Hinterrad festlegbar ist. Als Schraubbolzen und Muttern werden
zweckmäßigerweise diejenigen verwendet, mit denen das jeweilige Rad an dem Fahrzeug befestigt ist. Bekanntlich
weisen die Radscheiben fast aller bekannten Kraftfahrzeuge
Löcher auf, die entweder auf Stehbolzen aufgesetzt oder
mit Schraubbohrungen zur Deckung gebracht werden, worauf
zur Festlegung der Radscheibe entweder Muttern auf die Stehbolzen aufgeschraubt oder Schraubbolzen mit Mutterköpfen
in die Schraubbohrungen eingeschraubt werden. Zur Festlegung
der die Befestigungseinrichtung bildenden Scheibe müssen
also lediglich die Muttern oder Schraubbolzen an dem jeweiligen
Rad herausgeschraubt und die Bohrungen der Scheibe ebenfalls
auf die Stehbolzen aufgesteckt oder mit den Löchern der
Radscheibe zur Deckung gebracht werden. Anschließend werden
die Muttern aufgeschraubt oder die Schraubbolzen eingeschraubt, so daß Radscheibe und Scheibe der Abschleppvorrichtung gleichzeitig am Fahrzeug festgelegt sind. Dieser Vorgang ist außerordentlich einfach und schnell durchzuführen.
Er erfordert kaum einen größeren Zeitaufwand als das Anbringen eines Abschleppseils.

In zweckmäßiger Weiterbildung der Erfindung sind die Bohrungen in der ebenen Scheibe bzw. den ebenen Scheiben derart angeordnet, daß sie der Anordnung von Stehbolzen bzw.
Schraubbohrungen in den die Radscheiben tragenden Trägerscheiben verschiedener Kraftfahrzeugtypen entsprechen.
Besonders einfach gestaltet sich diese Anordnung der
Bohrungen in den Scheiben, wenn gemäß einem weiteren Vorschlag der Erfindung die Bohrungen wenigstens teilweise als bezüglich der Scheibe radial verlaufende Langlöcher ausgebildet sind. So können durch ein Langloch die radialen Lagen der Schraubbohrungen verschiedener Kraftfahrzeugtypen erfaßt werden.

Falls die bei dem jeweiligen Fahrzeugtyp zur Verfügung stehende Länge der Schraubbolzen, d.h. Stehbolzen oder freien Schraubbolzen, nicht ausreichen sollte, können in weiterer vorteilhafter Ausgestaltung der Erfindung zwischen Scheibe und Radscheibe Abstandshalter eingefügt sein, deren eines Ende ein Außengewinde und deren anderes Ende ein Innengewinde trägt, wobei Außen- bzw. Innengewinde jeweils dem Innen- bzw. Außengewinde der Schraubbohrungen und ggfs. Muttern bzw. Schraubbolzen der jeweiligen Radbefestigung entsprechen. Die Abstandshalter können bei dieser Ausgestaltung für beide erwähnten Befestigungsarten verwendet werden, wobei sie bei der einen Befestigungsart mit ihrem Außengewindeabschnitt durch die Bohrungen der Radscheibe in die Schraubbohrungen eingeschraubt werden und sodann die Scheibe der Abschleppvorrichtung in der richtigen Orientierung auf ihr äusseres Ende aufgesetzt wird, worauf die Schraubbolzen in die Innengewinde der Abstandshalter eingeschraubt werden. Bei der anderen Befestigungsart wird die Radscheibe auf die Stehbolzen aufgesteckt und sodann der Innengewindeabschnitt der Abstandshalter auf die Stehbolzen aufgeschraubt. Anschließend wird die Scheibe der Abschleppvorrichtung auf die Außengewindeabschnitte der Abstandshalter gesteckt und die Muttern werden von aussen auf die Außengewindeabschnitte aufgeschraubt. Auch diese Befestigungsart der Abschleppvorrichtung erfordert nicht wesentlich mehr Zeit als die Anbringung ohne Abstandshalter.

Um die erfindungsgemäße Vorrichtung jeweils dem zur Verfügung stehenden Abschleppfahrzeug anpassen zu können,
ist in weiterer vorteilhafter Ausgestaltung der Erfindung
die Stange aus mindestens zwei durch lösbare Steckverbindung aneinander festgelegten Abschnitten zusammengesetzt. Durch diese Ausgestaltung wird es in einfacher
Weise ermöglicht, in die Stange gerade oder abgewinkelte
Teile einzusetzen, je nachdem, ob das vordere Ende der
Stange in der Mitte der Rückseite des Abschleppfahrzeugs
oder seitlich an einem Rad dieses Fahrzeugs befestigt
werden soll. Ferner lässt sich infolge dieser Zerlegbarkeit
der Stange, vorzugsweise in drei Teile, jederzeit am
vorderen Ende derselben ein Teil zum Ankuppeln an einen
üblichen Abschleppkupplungsteil am Abschleppfahrzeug,
beispielsweise einen Kugelzapfen oder dgl., oder wahlweise eine auf Kugellager gelagerte Scheibe zur Befestigung
an einem Hinterrad des Abschleppfahrzeugs anbringen.
Gleichzeitig kann als Mittelabschnitt der Stange ein im
wesentlichen gerader oder aber ein in geeigneter Weise
abgewinkelter Abschnitt eingesetzt werden. Auch diese
Vorbereitung der Vorrichtung zum Abschleppen ist außerordentlich schnell und einfach von einer einzigen Bedienungsperson durchzuführen. Die lösbaren Steckverbindungen

- 8 -

können in an sich bekannter Weise so locker sein,
daß eine gegenseitige Verdrehung der beiden Fahrzeuge
um ihre Längsachse auch bei der zweiten Ausführungsform in geringem Ausmaß während des Abschleppens möglich
ist. Falls erforderlich, kann diese Verdrehbarkeit durch
Vergrößerung der in den Teilen der Stange vorgesehenen
Löcher zum Einstecken der Steckbolzen vergrössert werden.

Anhand der Figuren werden Ausführungsbeispiele der Erfindung näher erläutert. Es zeigt:

Fig. 1     eine schematische Seitenansicht einer ersten
           Ausführungsform der erfindungsgemäßen Vorrichtung, die einerseits an einem abschleppenden und andererseits an einem abzuschleppenden Fahrzeug festgelegt ist,

Fig. 2     eine Aufsicht auf die in Fig. 1 gezeigte Anordnung,

Fig. 3     eine Seitenansicht der gleichen Ausführungsform der erfindungsgemäßen Vorrichtung,

Fig. 4     eine Aufsicht auf die in Fig. 3 gezeigte
           Ausführungsform

Fig. 5     eine teilweise geschnittene Aufsicht auf den
           an einem lenkbaren Vorderrad des abzuschleppenden Fahrzeugs angebrachten rückwärtigen Teil
           der ersten Ausführungsform der erfindungsgemäßen
           Vorrichtung,

Fig. 6     eine teilweise geschnittene Seitenansicht des in

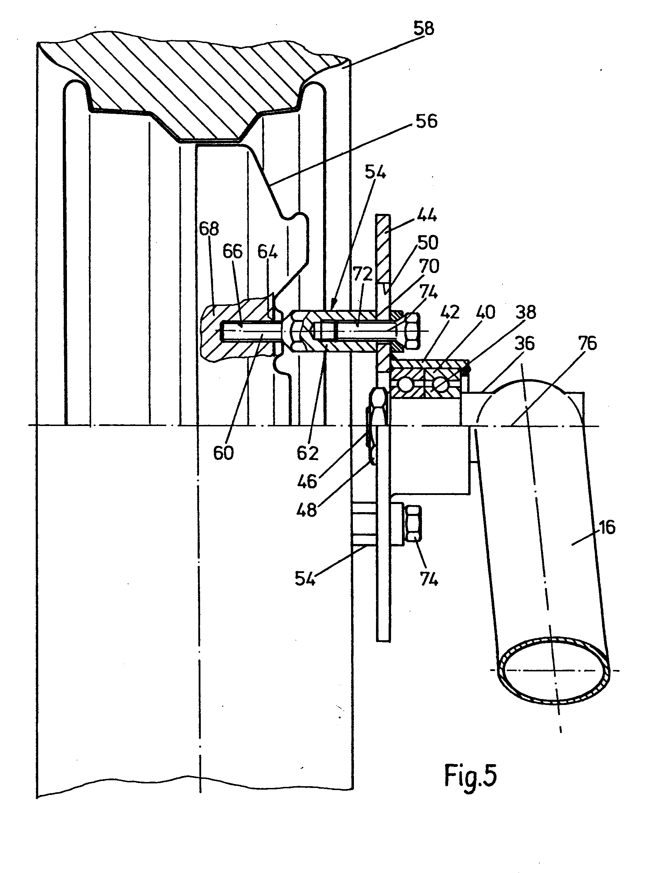

           Fig. 5 dargestellten Teils der Abschleppvorrichtung allein,

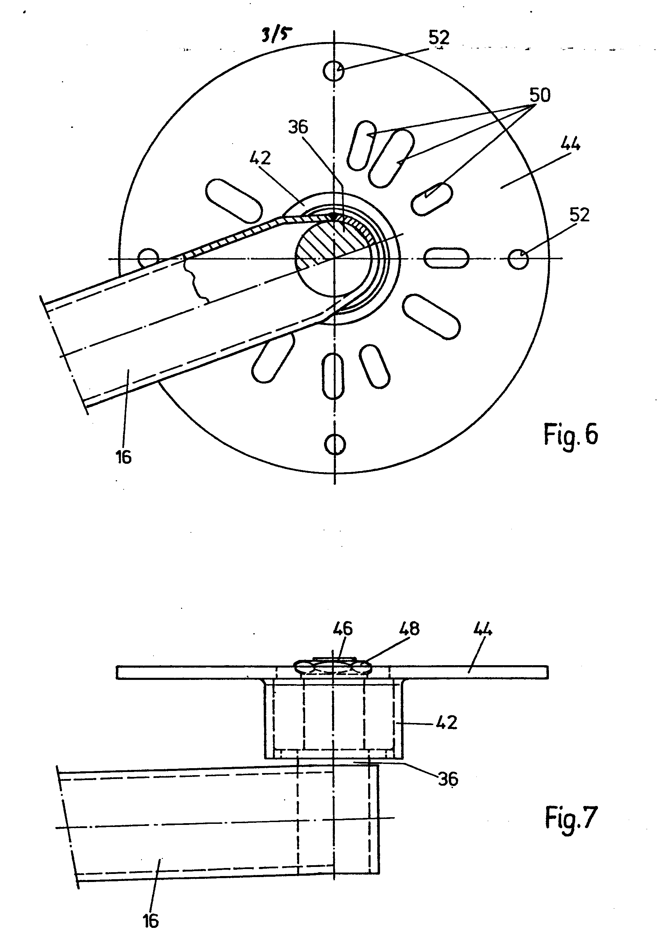

Fig. 7     eine Aufsicht auf den in Fig. 6 gezeigten Teil,

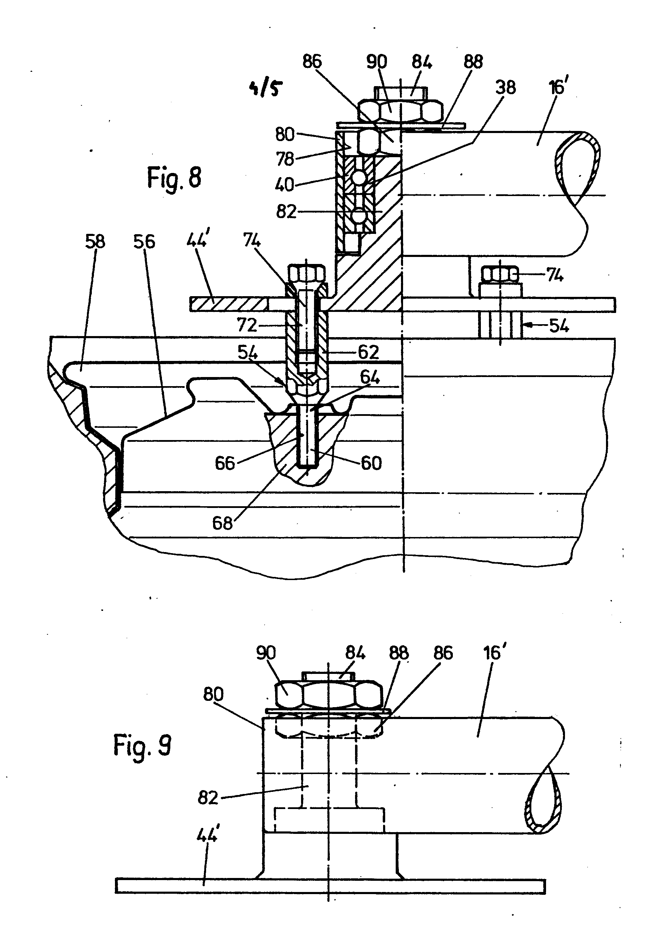

Fig. 8     eine der Fig. 5 entsprechende teilweise geschnittene Aufsicht auf den rückwärtigen Teil
           einer zweiten Ausführungsform der erfindungsgemäßen Vorrichtung mit daran festgelegtem Rad,

Fig. 9     eine Aufsicht auf den in Fig. 8 gezeigten Teil
           der Abschleppvorrichtung allein,

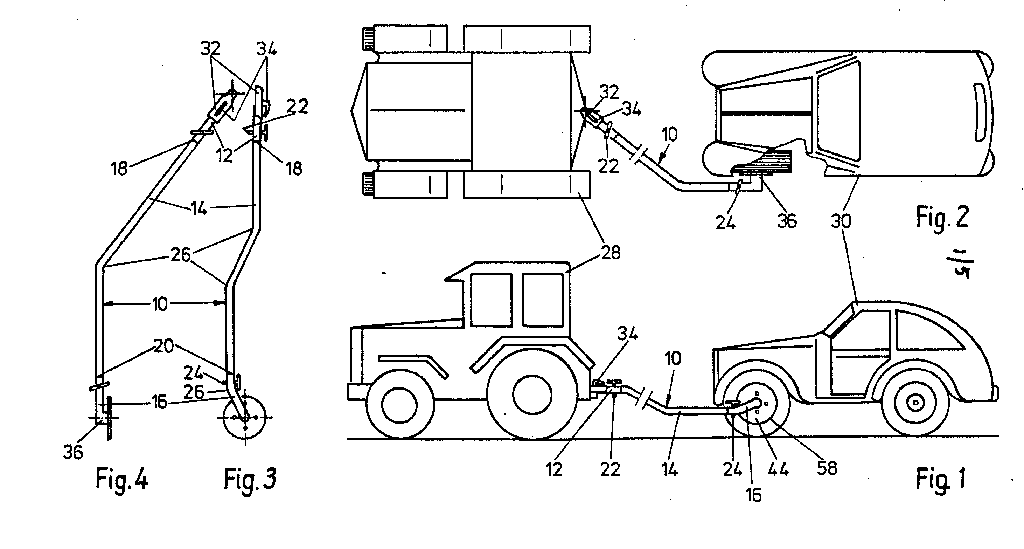

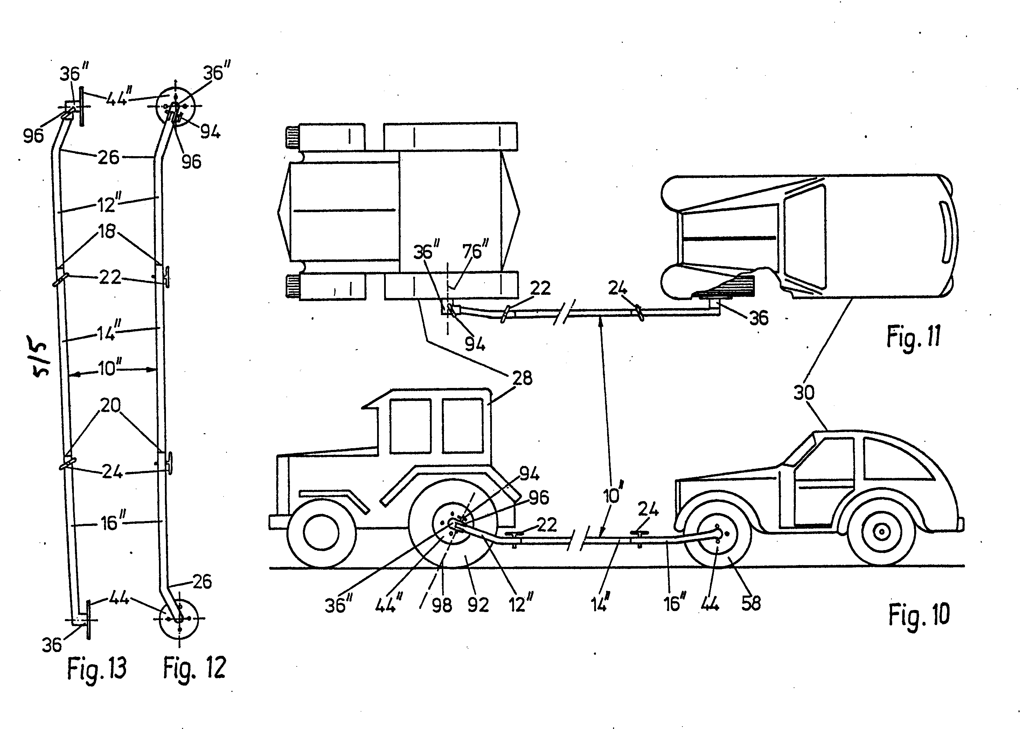

Fig. 10    eine der Fig. 1 entsprechende Seitenansicht mit
           einer dritten Ausführungsform der erfindungsgemäßen
           Vorrichtung,

Fig. 11    eine der Fig. 2 entsprechende Aufsicht auf die in
           Fig. 10 gezeigte Anordnung,

Fig. 12    eine Seitenansicht der dritten Ausführungsform
           der erfindungsgemäßen Vorrichtung und

- 10 -

Fig. 13  eine Aufsicht auf die in Fig. 12 gezeigte Ausführungsform.


In allen Figuren sind gleiche oder entsprechende Teile
mit gleichen Bezugszeichen versehen.

Bei der in den Figuren 1 bis 7 dargestellten Ausführungsform der Erfindung ist eine allgemein mit 10 bezeichnete
Stange vorgesehen, die aus zwei Endabschnitten 12 und 16
sowie einem Mittelabschnitt 14 zusammengesetzt ist. Die
einzelnen Abschnitte sind durch nicht näher zu erläuternde
Steckverbindungen 18 und 20 miteinander verbunden und werden in dieser
Lage um kleine Winkel gegenseitig verdrehbar durch Steckbolzen 22 und 24
festgehalten. Die Steckbolzen können zusätzlich in nicht näher
dargestellter Weise durch Sicherheitssplinte gehalten sein.
Der Mittelabschnitt 14 und der Endabschnitt 16 weisen
mehrere Abwinklungen 26 zur Anpassung an das abschleppende Fahrzeug  28 und das abzuschleppende Fahrzeug 30 auf.
Durch Auswechseln des Mittelabschnitts 14 und Einfügen
eines beliebig anders geformten Mittelabschnitts kann
die Stange jeweils den geforderten Verhältnissen angepasst
werden. Der vordere Abschnitt 12 der Stange trägt ein
Kupplungsglied 32, das in an sich bekannter Weise mittels
eines Steckstiftes ·34  in einem gewissen Ausmaß allseitig
beweglich am Rahmen des abschleppenden Fahrzeugs 28 festgelegt werden kann.

Der rückwärtige Abschnitt 16 der Stange 10 trägt einen
rechtwinklig abgewinkelten Ansatz 36 (siehe Figur 5),
der den inneren Laufring 38 eines Kugellagers trägt, dessen
äusserer Laufring 40 in einer das Kugellager umfassenden
Ringhülse 42 befestigt ist. Die Ringhülse 42 ist an einer

- 11 -

ebenen kreisförmigen Scheibe 44 befestigt. Am inneren
Ende des Ansatzes 36 sitzt ein Gewindezapfen 46, auf
den eine Mutter 48 zum Festhalten des inneren Laufrings
38 aufgeschraubt ist.

Die Scheibe 44 weist eine Reihe von radial gerichteten
Langlöchern 50 und einige kreisförmige Löcher 52 auf.
Über allgemein mit 54 bezeichnete Abstandshalter ist die
Scheibe 44 an der Radscheibe 56 eines lenkbaren Vorderrades 58 des abzuschleppenden Fahrzeugs 30 befestigt.
Jeder Abstandshalter 54 weist einen mit Außengewinde
versehenen Abschnitt 60 und einen mit Innengewinde versehenen Abschnitt 62 auf. Der Außengewindeabschnitt 60
ist durch ein Loch 64 der Radscheibe 56 gesteckt und in
eine Schraubbohrung 66 der die Radscheibe 56 tragenden,
nur teilweise dargestellten Trägerscheibe 68 eingeschraubt. Der Außengewindeabschnitt 62 liegt mit seiner
ebenen Außenfläche 70 an der zum Rad weisenden Fläche
der Scheibe 44 an. Seine Innengewindebohrung 72 deckt
sich mit einem Langloch 50 der Scheibe 54. Von der gegenüberliegenden Seite der Scheibe 44 ist ein Schraubbolzen
74 mit Mutterkopf durch das Langloch 50 in die Innengewindebohrung 72 geschraubt. Somit ist die Scheibe 44 an
der Radscheibe 56 festgelegt. Sie kann sich zusammen
mit dem Rad 58 bezüglich des rückwärtigen Abschnitts
16 der Stange 10 um die Drehachse 76 drehen, die durch
die Mittelachse des Ansatzes 36 bezüglich der Stange 10
festgelegt ist. Als Schraubbolzen 74 sind die normalerweise die Radscheibe 56 an der Trägerscheibe 68 festhaltenden, in die Schraubbohrungen 66 einzuschraubenden
Schraubbolzen verwendet. Zur Montage müssen also lediglich diese Schraubbolzen 74 aus den Schraubbohrungen 66
entfernt, die Abstandshalter 54 eingeschraubt und sodann

- 12 -

die Scheibe 44 mittels der Schraubbolzen 74 an den Abstandshaltern festgelegt werden.

Bei einem Fahrzeugtyp, dessen Trägerscheibe 68 nach aussen stehende Stehbolzen trägt, auf die Muttern aufgeschraubt werden, werden statt dessen die Muttern abgeschraubt, die Abstandshalter 54 mit ihrem Innengewindeabschnitt 62 auf die Stehbolzen aufgeschraubt, die Scheibe 44 mittels ihrer Bohrungen auf die Außengewindeabschnitte 60 aufgesteckt und sodann die vorher gelösten Muttern auf die Außengewindeabschnitte 60 aufgeschraubt. Die Montage erfolgt also dort in ebenso einfacher Weise wie bei dem dargestellten Ausführungsbeispiel.

Die in den Figuren 8 und 9 dargestellte zweite Ausführungsform der Erfindung unterscheidet sich von der ersten Ausführungsform im wesentlichen dadurch, daß die Lagerung der Scheibe 44' bezüglich des rückwärtigen Abschnitts 16' der Stange in etwas anderer Weise erfolgt. Da alle übrigen Teile der erfindungsgemäßen Vorrichtung bei dieser Ausführungsform gleich ausgebildet sind wie bei der ersten Ausführungsform gemäß den Figuren 1 bis 7, werden von dieser zweiten Ausführungsform nur die unterschiedlichen Teile dargestellt.

Bei dieser zweiten Ausführungsform weist der rückwärtige Abschnitt 16' der Stange an seinem Ende eine Öse 80 mit hohlzylindrischer Ausnehmung 78 auf, in der der äussere Laufring 40 des Kugellagers in nicht näher gezeigter Weise befestigt ist. Der innere Laufring 38 des Kugellagers sitzt bei dieser Ausführungsform auf einem dorn-

- 13 -

förmigen axialen Ansatz der Scheibe 44'. Der äussere Endabschnitt 84 des Ansatzes 82 ist mit einem Aussengewinde
versehen, auf das eine Mutter 86 und unter Zwischenschaltung einer Beilagscheibe 88 eine Kontermutter 90 aufgeschraubt sind. Die übrigen, hier nicht mehr näher beschriebenen Teile dieser Ausführungsform sind in Ausgestaltung und Funktion mit denjenigen des ersten Ausführungsbeispiels identisch.

Die in den Figuren 10 bis 13 gezeigte dritte Ausführungsform der Erfindung unterscheidet sich von der ersten Ausführungsform im wesentlichen dadurch, daß nicht nur am
rückwärtigen Abschnitt 16" der Stange 10" eine Scheibe
44 in der in den Figuren 1 bis 7 gezeigten Art gelagert
und an einem lenkbaren Vorderrad 58 des abzuschleppenden
Fahrzeugs 30 befestigt ist, sondern auch am vorderen Abschnitt 12"˙ der Stange in gleicher und daher nicht näher
dargestellter Weise eine Scheibe 44" gelagert  und an
einem Hinterrad 92 des abschleppenden Fahrzeugs 28 befestigt ist. Die Stange 10" hat daher bei dieser dritten
Ausführungsform eine andere Form als bei den bisher beschriebenen Ausführungsformen. Grundsätzlich könnte zwar
bei dieser Ausführungsform der vordere Abschnitt 12" und
der rückwärtige Abschnitt 16" der Stange 10" den entsprechenden Abschnitten 12 und 16 der ersten Ausführungsform gleich sein und die Formänderung könnte auf den
Mittelabschnitt 14" beschränkt sein, so daß nur dieser
Mittelabschnitt 14" beim Übergang von der einen auf die
andere Ausführungsform ausgewechselt werden müsste. Für
manche Anwendungszwecke ist aber die Form der Stange 10"
vorteilhafter.

Wesentlich ist, daß bei dieser Ausführungsform der vordere
Abschnitt 12" der Stange 10" über ein durch einen Steck-

- 14 -

zapfen 94 zusammengehaltenes Schwenkgelenk 96 mit dem das
hier nicht gezeigte Kugellager und die Scheibe 44" tragenden
Ansatz 36" verbunden ist. Die durch die Axialrichtung des
Steckzapfens 94 festgelegte Schwenkachse 98 des Schwenkgelenks 96 steht auf der durch die Achse des Ansatzes 36"
festgelegten Drehachse 76" der Scheibe 44" senkrecht. Dadurch wird die kardanische Verbindung der Stange 10" mit
dem abschleppenden Fahrzeug 28 gewährleistet.

Falls erforderlich, kann natürlich der vordere Abschnitt
12" und ggfs. auch der Mittelabschnitt 14" der Stange 10"
stärker nach aussen abgewinkelt sein als bei dem dargestellten Ausführungsbeispiel, um größere Schwenkwinkel des
Schwenkgelenks 96 und somit des abschleppenden Fahrzeugs
28 bezüglich der Stange 10" zuzulassen. Hier sind der Ausformung der Stange 10" je nach Anwendungszweck keine Grenzen
gesetzt. Es sollte lediglich vermieden werden, daß die
Stange von der Seitenfläche der Fahrzeuge zu weit nach aussen
steht.

- 15 -

Patentansprüche

1. Vorrichtung zum Abschleppen eines Fahrzeugs, das mindestens ein lenkbares Vorderrad aufweist, mit einer starren Stange, deren vorderes Ende mittels einer lösbaren .        . Gelenkverbindung an dem abschleppenden Fahrzeug und deren rückwärtiges Ende an dem abzuschleppenden Fahrzeug festlegbar ist, dadurch gekennzeichnet, daß am rückwärtigen Ende der Stange (10,10") eine an einem lenkbaren Vorderrad (58) des abzuschleppenden Fahrzeugs (30) lösbar festlegbare Befestigungseinrichtung (44,44',44") um eine wenigstens bezüglich des rückwärtigen Endes der Stange feste Drehachse (76) drehbar gelagert ist.

2. Vorrichtung nach Anspruch 1, dadurch gekennzeichnet, daß am vorderen Ende der Stange (10") eine an einem Hinterrad (92) des abschleppenden Fahrzeugs (28) lösbar festlegbare Befestigungseinrichtung (44") um eine Achse (98) schwenkbar und um eine dazu senkrechte Achse (76") drehbar gelagert ist.

3. Vorrichtung nach Anspruch 1 oder 2, dadurch gekennzeichnet, daß die Befestigungseinrichtung (44) bzw. Befestigungseinrichtungen (44,44',44") über je ein Kugellager (38,40) drehbar mit dem jeweiligen Ende der Stange (10,10") verbunden sind.

4. Vorrichtung nach einem der vorangehenden Ansprüche, dadurch gekennzeichnet, daß die Befestigungseinrichtung bzw. Befestigungseinrichtungen je eine ebene Scheibe (44,44',44") mit Bohrungen (50,52) aufweisen, die mittels durch die Bohrungen geführter Schraubbolzen (z.B. 74) und ggfs. auf diese aufgeschraubter Muttern an dem lenkbaren Vorderrad (58) und ggfs. an dem Hinterrad (92) festlegbar ist.

5. Vorrichtung nach Anspruch 4, dadurch gekennzeichnet,daß die Bohrungen (50,52) in der ebenen Scheibe (44) bzw. den ebenen Scheiben (44,44',44") derart angeordnet sind, daß sie der Anordnung von Stehbolzen bzw. Schraubbohrungen (66) in den die Radscheiben (56) tragenden Trägerscheiben (68) verschiedener Kraftfahrzeugtypen entsprechen.

6. Vorrichtung nach Anspruch 5, dadurch gekennzeichnet, daß die Bohrungen (50,52) wenigstens teilweise als bezüglich der Scheibe (44,44',44") radial verlaufende Langlöcher (50) ausgebildet sind.

7. Vorrichtung nach Anspruch 5 oder 6, dadurch gekennzeichnet, daß zwischen Scheibe (44,44',44") und Radscheibe (56) Abstandshalter (54) eingefügt sind, deren eines Ende (60) ein Außengewinde und deren anderes Ende (62) ein Innengewinde trägt, wobei Außen- bzw. Innengewinde jeweils dem Innen- bzw. Außengewinde der Schraubbohrungen (66) und ggfs. Muttern bzw. Schraubbolzen (74) der jeweiligen Radbefestigung entsprechen.

8. Vorrichtung nach einem der vorangehenden Ansprüche, dadurch gekennzeichnet, daß die Stange (10,10") aus mindestens zwei durch lösbare Steckverbindung aneinander festgelegten Abschnitten (12',14',16'; 12" , 14", 16") zusammengesetzt ist.

73

Fig.5

3/5

52

50

36

42

44

52

16

**Fig. 6**

46    48    44

42

36

16

**Fig. 7**

4/5

Fig. 8

Fig. 9

0006236

5/5

Fig. 13    Fig. 12

Fig. 11

Fig. 10

# EUROPÄISCHER RECHERCHENBERICHT

**Europäisches Patentamt**

**Nummer der Anmeldung**

EP 79 101 974.8

| | EINSCHLÄGIGE DOKUMENTE | | KLASSIFIKATION DER ANMELDUNG (Int.Cl.3) |
|---|---|---|---|
| Kategorie | Kennzeichnung des Dokuments mit Angabe, soweit erforderlich, der maßgeblichen Teile | betrifft Anspruch | |
| X | <u>DE - C - 805 595</u> (J.DARGAUD) <br> * Seite 2, Zeilen 25 bis 98; <br> Fig. 1 bis 4 * <br> -- | 1,3-5, 7 | B 60 D 1/16 |
| | <u>AT - B - 311 809</u> (PIGGY BACK TRAILER RENTAL LTD.) <br> * Seite 3, Zeile 14 bis Seite 4, <br> Zeile 55; Fig. 1 bis 6 * <br> -- | 2-7 | |
| | <u>US - A - 2 210 007</u> (H.H.RODIN) <br> * Seite 1, rechte Spalte, Zeilen 32 <br> bis 45;Seite 2, linke Spalte, <br> Zeilen 24 bis 63; Fig. 1,3 * <br> -- | 1,3 | **RECHERCHIERTE SACHGEBIETE (Int. Cl.3)** <br><br> B 60 D 1/00 |
| | <u>US - A - 2 210 008</u> (H.H. RODIN) <br> * Fig. 1, 2, 3 * <br> -- | 1,3 | |
| | <u>DE - U - 7 708 094</u> (J. BÖWER) <br> * Anspruch 8; Seite 2, Zeilen 3 bis <br> 25; Fig. 1 bis 3 <br> -- | 8 | |

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie. Übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 12-09-1979 | LEITZ |

EPA form 1503.1  06.78